(19) Europäisches Patentamt
European Patent Office
Office européen des brevets

(11)  EP 2 832 169 B1

(12)  FASCICULE DE BREVET EUROPEEN

(45) Date de publication et mention
de la délivrance du brevet:
**29.08.2018  Bulletin 2018/35**

(51) Int Cl.:
***H04W 74/08*** *(2009.01)*  ***H04W 72/12*** *(2009.01)*
***H04W 84/18*** *(2009.01)*

(21) Numéro de dépôt: **13715384.7**

(22) Date de dépôt: **27.03.2013**

(86) Numéro de dépôt international:
**PCT/FR2013/050662**

(87) Numéro de publication internationale:
**WO 2013/144507 (03.10.2013 Gazette 2013/40)**

(54)  **ROUTAGE DE DONNÉES DANS UN RÉSEAU DE CAPTEURS**

DATENROUTING IN EINEM SENSORARRAY

DATA ROUTING IN A SENSOR ARRAY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **29.03.2012  FR 1252865**

(43) Date de publication de la demande:
**04.02.2015  Bulletin 2015/06**

(73) Titulaire: **Orange**
**75015 Paris (FR)**

(72) Inventeur: **KOUNTOURIS, Apostolos**
**F-38000 Grenoble (FR)**

(56) Documents cités:
**FR-A1- 2 961 986     US-A1- 2006 018 336**

• **KIEN NGUYEN ET AL: "A Prioritized MAC
Protocol for Multihop, Event-driven Wireless
Sensor Networks", COMMUNICATIONS AND
ELECTRONICS, 2006. ICCE '06. FIRST
INTERNATION AL CONFERENCE ON, IEEE, PI, 1
octobre 2006 (2006-10-01), pages 47-52,
XP031079267, ISBN: 978-1-4244-0568-8**

# Description

L'invention se rapporte au domaine des réseaux de communication sans fil et plus particulièrement aux protocoles de routage à sauts multiples utilisés dans des réseaux de communication sans fil sans infrastructure.

De façon connue, un réseau sans infrastructure, appelé également réseau adhoc, est un réseau comportant des noeuds, par exemple des capteurs, connectés de proche en proche, sans contrôle central.

Dans un protocole de routage à sauts multiples, un noeud source qui ne peut atteindre directement un noeud destination, en raison par exemple de contraintes de distance ou de ressources, utilise des noeuds intermédiaires pour relayer le message. Ainsi, le noeud source diffuse le message via une liaison sans fil, par exemple une liaison radio. Le message est reçu par au moins un noeud à portée de communication du noeud source, appelé noeud voisin, qui relaie à son tour le message à au moins un de ses voisins, et ainsi de suite jusqu'à ce que la destination finale soit atteinte. Les noeuds interagissent seulement avec leurs voisins directs. Ils ne connaissent pas la topologie globale du réseau.

Ce protocole fonctionne en deux étapes. Lors d'une première étape, les routes sont calculées. Puis, dans une deuxième étape, les paquets de données sont acheminés par les routes calculées. Les routes sont périodiquement recalculées pour prendre en compte des éventuels changements de topologie du réseau.

Le protocole de routage Greedy Forwarding, décrit par exemple dans un document de Stojmenovic, Ivan, intitulé "Position based routing in ad hoc networks" publié dans "IEEE Comunications magazine", est un exemple de protocole de routage à sauts multiples. Dans ce protocole de routage, les routes sont calculées par construction incrémentale. Une métrique calculée par un noeud sur la base des informations fournies par les noeuds voisins, permet de sélectionner le noeud suivant.

Plus précisément, le protocole de routage Greedy Forwarding utilise deux types de paquets d'information : HELLO et DATA. Les paquets HELLO sont des messages de signalisation. Les paquets DATA permettent de transmettre les données. Chaque noeud du réseau connaît son propre emplacement géographique et celui de la destination finale. Chaque noeud échange avec ses voisins directs son information de localisation en envoyant périodiquement des paquets HELLO. Ainsi, chaque noeud connaît la localisation de ses voisins. Un noeud, ayant des données à transmettre, utilise les informations de localisation reçues de ses voisins pour sélectionner le noeud voisin le plus proche de la destination finale et transmet au noeud sélectionné, les données dans un ou plusieurs paquets DATA.

Ce protocole est très performant notamment en termes de délais, de taux de livraison et de consommation.

Cependant, il est très sensible à la falsification des informations utilisées pour calculer la métrique. Par exemple, les paquets HELLO transmis par un noeud malveillant contiennent une information de localisation erronée, par exemple proche de la destination finale. Sur la base de cette information, ce noeud malveillant est donc systématiquement choisi parmi les noeuds voisins d'un noeud cherchant à déterminer un noeud suivant. Ledit noeud transmet alors systématiquement à ce noeud malveillant, les paquets DATA qu'il doit transmettre mais le noeud malveillant ne retransmet pas les paquets DATA au noeud suivant. Ainsi, il suffit d'un seul voisin malveillant qui attire tout le trafic d'un noeud pour obtenir une déconnexion totale entre un noeud source et le noeud de destination.

Le document "A Prioritized MAC Protocol for Multihop, Event-driven Wireless Sensor Networks" par KIEN NGUYEN ET AL, IEEE, 1 octobre 2006, décrit un réseau de capteurs sans-fil utilisant une loi de probabilité pour l'attribution d'intervalles de temps, visant à diminuer la consommation d'énergie.

Il existe donc un besoin d'un protocole de routage simple, robuste aux tentatives de perturbation du fonctionnement du réseau par des pratiques de piratage et peu consommateur d'énergie.

L'invention vient améliorer la situation.

A cet effet, l'invention se rapporte à un procédé de routage de données diffusées par un premier dispositif et reçues par un deuxième dispositif pendant une première fenêtre temporelle, le premier, respectivement le deuxième, dispositif formant noeud d'un réseau d'une pluralité de noeuds aptes à communiquer à travers un canal de communication sans fil, caractérisé en ce qu'il comporte les étapes suivantes, mises en oeuvre par le deuxième dispositif formant noeud:

- sélection d'un intervalle de temps parmi un ensemble d'intervalles de temps prédéfinis d'une deuxième fenêtre temporelle consécutive à ladite première fenêtre temporelle;
- surveillance dudit canal entre la fin de ladite première fenêtre temporelle et ledit intervalle de temps sélectionné pour détecter la présence ou l'absence d'un signal sur ledit canal;
- diffusion desdites données à partir d'un instant dudit intervalle de temps sélectionné en cas détection d'absence de signal et
- non diffusion en cas de détection de présence de signal.

Le routage par diffusion permet d'obtenir un routage robuste au piratage.

L'étape de surveillance permet de détecter la présence d'un signal sur la liaison radio. La présence d'un signal est significative d'une activité de diffusion d'un noeud à portée de communication du noeud considéré.

Un noeud détectant la présence d'un signal en déduit que ce signal correspond probablement à la diffusion de données par un autre noeud et ne diffuse pas ces données.

En revanche, s'il ne détecte aucune activité, il diffuse les données reçues.

L'activité de transmission de données par un noeud est consommatrice d'énergie. La non diffusion de ces données permet d'économiser de l'énergie.

Grâce au procédé, le nombre de données transmises par un noeud est globalement diminué et permet ainsi de diminuer la consommation énergétique du noeud.

L'utilisation d'un procédé de diffusion et d'un mécanisme permettant de réduire le nombre de messages transmis permet d'obtenir un procédé économique en énergie tout en étant simple, fiable et robuste.

Selon une caractéristique du procédé de routage, l'intervalle de temps est sélectionné par tirage aléatoire, conformément à une loi de probabilité définie, d'une valeur identifiant ledit intervalle.

Le tirage aléatoire permet de rendre le moment d'envoi des données non prévisible et ainsi d'obtenir un procédé robuste au piratage.

Selon un mode de réalisation particulier du procédé de routage, la deuxième fenêtre temporelle comporte un nombre prédéterminé N d'intervalles de temps consécutifs prédéterminés, un rang est associé à un intervalle en fonction d'une position dudit intervalle par rapport au début de la deuxième fenêtre temporelle, et la probabilité de sélectionner l'intervalle de rang k+1 parmi les N intervalles est supérieure ou égale à la probabilité de sélectionner l'intervalle de rang k.

Une telle loi de probabilité permet de favoriser la sélection d'intervalles de rang élevé, c'est-à-dire les intervalles éloignés de l'instant de réception des données. Lors d'une telle sélection, l'étape de surveillance est plus longue que lors de la sélection d'un intervalle de rang faible. La probabilité de détection d'une activité est plus grande. La probabilité d'avoir à diffuser les données est alors plus faible. Ceci permet une économie d'énergie supplémentaire.

Selon un autre mode de réalisation du procédé de routage, utilisé seul ou en combinaison avec le mode de réalisation précédent, la probabilité de sélection d'une valeur identifiant un intervalle est déterminée en fonction d'une valeur représentative d'une qualité du signal reçu lors de la réception desdites données.

Une loi de probabilité déterminée en fonction de la qualité du signal permet de pondérer la probabilité de sélection d'un intervalle en fonction de la qualité du signal reçu. La qualité du signal reçu est meilleure lorsque la distance entre un noeud émetteur et un noeud récepteur est faible que lorsque cette distance est élevée. Cette propriété est utilisée ici pour pondérer la probabilité de sélection des différents intervalles. Par exemple, la pondération permet de favoriser la sélection d'un intervalle de temps proche de l'instant de réception des données et ainsi la diffusion par le noeud de données ou au contraire de favoriser la sélection d'un intervalle de temps éloigné de l'instant de réception et ainsi de diminuer la probabilité de diffusion par le noeud de données.

Selon une caractéristique particulière du procédé de routage, ladite valeur représentative d'une qualité dudit signal est déterminée à partir d'une mesure dudit signal

Une mesure de signal représentative de la qualité du signal reçu est réalisée sur le signal reçu pendant la réception de données. La mesure du signal permet de déterminer une valeur représentative de la qualité propre à chaque noeud et à chaque réception de messages. La valeur représentative de la qualité du signal reçu est déterminée par chaque noeud. Des valeurs différentes sont calculées par deux noeuds recevant les mêmes données au même moment. De même, des valeurs différentes sont calculées par un même noeud recevant des mêmes données à des instants différents.

Selon un mode de réalisation particulier du procédé de routage, la probabilité de sélection d'une valeur identifiant un intervalle est déterminée en fonction d'une valeur représentative d'une qualité du signal reçu lors de la réception desdites données, du nombre d'intervalles et de ladite valeur identifiant l'intervalle et la probabilité de sélection d'un intervalle de rang faible est inversement proportionnelle à ladite valeur représentative d'une qualité du signal reçu.

Une qualité du signal reçu faible est significative d'une distance élevée entre le noeud émetteur et le noeud récepteur. Une pondération permettant d'augmenter la probabilité de sélection d'un intervalle de rang faible augmente les chances que le noeud ne détecte aucun signal pendant la phase de surveillance et qu'ainsi il diffuse les données. Les données sont alors transmises par moins de noeuds intermédiaires et progressent plus rapidement vers leur destination.

Selon un mode de réalisation du procédé de routage, l'étape de diffusion est suivie d'une étape de repos pendant laquelle la fonction de réception est désactivée.

Les données diffusées transmises par un premier noeud sont reçues par un noeud voisin, qui est un deuxième noeud. Ce deuxième noeud rediffuse le message. Lors de cette rediffusion par le deuxième noeud, le premier noeud, étant à portée de communication de ce deuxième noeud, est susceptible de recevoir les données rediffusées. L'étape de repos, après une étape de diffusion, évite la réception par ce premier noeud des données rediffusées. La réception de données par un noeud étant plus consommatrice d'énergie que la mise en repos, la mise en repos permet une économie d'énergie supplémentaire.

Selon un autre mode de réalisation utilisé seul ou en combinaison avec un mode de réalisation précédent, l'étape de non diffusion comprend une étape d'écoute pendant laquelle la fonction de réception est activée.

L'étape d'écoute permet à un noeud n'ayant pas diffusé les données de s'assurer que les données ont été diffusées par un noeud voisin.

Selon un mode de réalisation, utilisé seul ou en combinaison avec un mode de réalisation précédent, l'étape de non diffusion est suivie d'une étape de sélection d'un intervalle de rang le plus faible et d'une étape de diffusion des données.

La sélection d'un intervalle de rang faible, au cours du processus, permet au noeud d'être le premier à réserver l'accès au médium et ainsi de diffuser les données, quel que soit l'intervalle sélectionné par les autres noeuds. Ce processus est particulièrement utile dans le cas ou une entité malveillante émet systématiquement un signal pendant l'intervalle de rang faible dans le but d'empêcher les émissions des autres noeuds, et donc de bloquer le système. Ce processus permet de rendre le procédé plus résistant au piratage.

Selon une caractéristique particulière, en cas de détection d'un signal pendant l'étape de surveillance, le procédé de routage comprend une étape de réception de données et une étape de comparaison des données reçues pendant la première fenêtre temporelle avec les données reçues pendant l'étape de réception.

Dans ce mode de réalisation, suite à la détection d'une activité, le noeud se positionne en réception pour s'assurer que les données reçues correspondent aux données qu'il a reçu précédemment. Il vérifie ainsi que les données qu'il a reçu ont été retransmises. Dans le cas contraire, par exemple si les données sont différentes ou erronées, il peut envisager une transmission des données initialement reçues. Ce mode de réalisation permet d'augmenter la fiabilité de transmission des données.

Selon un mode de réalisation du procédé de routage, l'étape de diffusion est suivie d'une étape de réception de données, d'une étape de comparaison desdites données reçues avec les données transmises pendant l'étape de diffusion et, en fonction du résultat de la comparaison, d'une étape de repos pendant laquelle la fonction de réception est désactivée ou d'une étape de rediffusion desdites données transmises.

Les étapes de réception et de comparaison permettent de s'assurer que les données ont été retransmises. Elles sont utilisées comme acquittement de la transmission des données. La non réception de données ou la réception de données ne correspondant pas aux données émises sont interprétées comme une erreur de transmission et les données sont de nouveau réémises. Ce mode de réalisation permet d'augmenter la fiabilité de transmission des données.

Selon une variante, un nombre maximum de tentatives de réémission peut être défini pour s'assurer que le processus s'arrête.

L'invention se rapporte également à un dispositif formant noeud d'un réseau d'une pluralité de noeuds aptes à communiquer à travers d'un canal de communication sans fil, comportant des moyens de réception d'un message de données pendant une première fenêtre temporelle, lesdites données étant diffusées par un premier dispositif formant noeud.

Selon l'invention, le dispositif comporte :

- des moyens de sélection d'un intervalle de temps parmi un ensemble d'intervalles de temps prédéfinis d'une deuxième fenêtre temporelle consécutive à ladite première fenêtre;
- des moyens de surveillance dudit canal entre la fin de ladite première fenêtre temporelle et ledit intervalle de temps sélectionné pour détecter la présence ou l'absence d'un signal sur ladite liaison;
- des moyens de diffusion desdites données à partir d'un instant dudit intervalle de temps en cas détection d'absence de signal et
- des moyens de non diffusion en cas de détection de présence de signal.

L'invention se rapporte encore à un système comprenant une pluralité de dispositifs formant noeuds, comprenant au moins un dispositif formant noeud tel que décrit précédemment.

L'invention concerne enfin un produit programme d'ordinateur comprenant des instructions pour mettre en oeuvre les étapes d'un procédé de routage tel que décrit précédemment, lorsqu'il est chargé et exécuté par un processeur.

D'autres particularités et avantages de la présente invention apparaîtront dans la description suivante de modes de réalisation donnés à titre d'exemples non limitatifs, en référence aux dessins annexés, dans lesquels :

- la figure 1 est un schéma général illustrant le contexte général de l'invention;
- la figure 2 est un schéma bloc représentant un capteur apte à réaliser les étapes d'un procédé de routage selon un mode de réalisation de l'invention,
- la figure 3 est un organigramme illustrant les différentes étapes d'un procédé de routage selon un premier mode de réalisation,
- la figure 4 est un schéma illustrant des fenêtres temporelles,
- la figure 5 est un schéma illustrant une fenêtre temporelle,
- la figure 6 est un organigramme illustrant les différentes étapes d'un procédé de routage selon un deuxième mode de réalisation,
- la figure 7 illustre des exemples de fonctions utilisés pour la détermination d'une valeur représentative d'une qualité de signal,
- la figure 8 représente des exemples de courbes illustrant les valeurs de probabilité obtenues pour chaque intervalle d'un ensemble de 16 intervalles, en fonction d'un rang k de l'intervalle et d'une valeur représentative d'une qualité de signal.
- la figure 9 est un schéma illustrant un mode de réalisation du procédé de routage mis en oeuvre par une pluralité de capteurs..

L'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit ci-dessous pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou avec processeur intégré pour l'exécution de logiciel, par exemple un circuit intégré, une carte à puce, une carte électronique pour l'exécution d'un micrologiciel (firmware), etc.

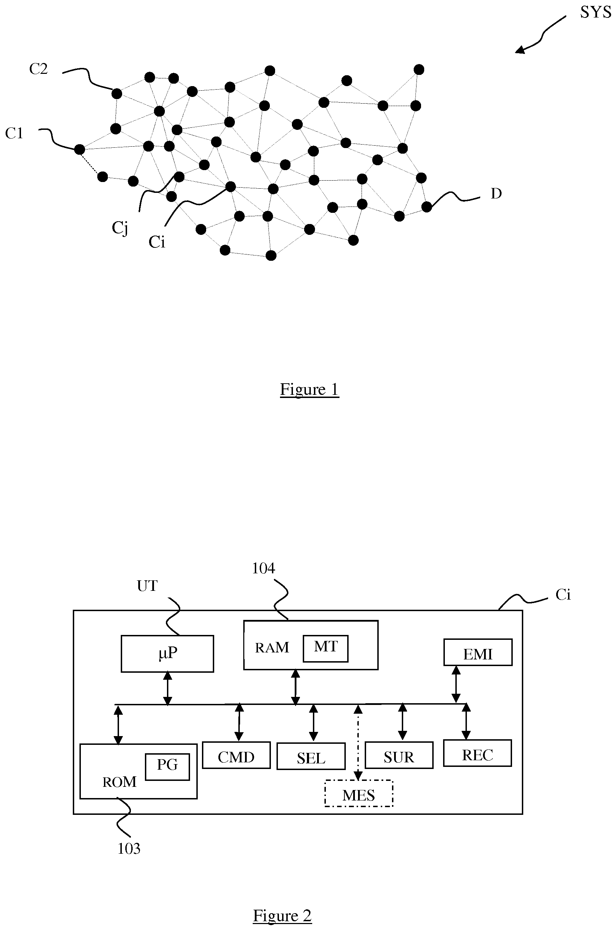

Un premier mode de réalisation de l'invention va maintenant être décrit en référence aux figures 1 à 5.

La **figure 1** représente un système SYS comprenant un dispositif de collecte D et une pluralité de capteurs C1, C2,...Ci... placés aléatoirement selon une répartition uniforme dans une zone géographique.

Chaque capteur Ci est par exemple un capteur de mesures apte à effectuer périodiquement un ensemble de mesures et à transmettre des données contenant les mesures effectuées, à destination du dispositif de collecte D.

Chaque capteur Ci est également apte à recevoir des données en provenance d'un autre capteur du système SYS et à les retransmettre à destination du dispositif de collecte D.

Chaque capteur Ci représente respectivement un noeud.

La pluralité de noeuds est organisée en un réseau dit sans infrastructure ou encore réseau Adhoc.

Dans la suite de la description, un capteur est appelé indifféremment noeud ou capteur.

Un capteur représente un dispositif formant noeud.

Chaque noeud est apte à communiquer avec les noeuds voisins de ce noeud via une liaison sans fil, par exemple une liaison Zigbee, wifi ou une autre liaison de type radio.

Un noeud voisin d'un noeud courant est un noeud à portée de communication de ce noeud courant. Plus précisément, la distance euclidienne entre un noeud courant et un noeud voisin de ce noeud courant est inférieure à la portée de communication. Il est précisé que la portée de communication peut varier selon les conditions de propagation.

La liaison entre deux noeuds est une liaison bidirectionnelle.

De façon connue, la limitation de la puissance d'émission pour les liaisons sans fil ne permet pas à un noeud courant de dialoguer en lien direct avec l'ensemble des noeuds du système SYS.

Aussi, la transmission de données d'un noeud courant vers le dispositif de collecte D hors de portée de ce noeud courant s'effectue via un ou plusieurs noeuds intermédiaires. Plus généralement, la transmission de données d'un noeud source vers le dispositif de collecte D s'effectue selon un protocole de routage à sauts multiples.

Suite, par exemple, à la saisie d'un ensemble de mesures, un capteur de l'ensemble SYS, par exemple le capteur C1, souhaite transmettre des données MD comportant les mesures effectuées, au dispositif de collecte D. Le dispositif de collecte D n'étant pas à portée de communication du capteur C1, le capteur C1 ne peut transmettre les données directement au dispositif de collecte D. Les données MD sont transmises de proche en proche via des capteurs du système SYS jusqu'à atteindre le dispositif de collecte D.

Plus précisément, le capteur C1 diffuse un message M contenant les données MD. Le message M est reçu par les noeuds voisins, c'est-à-dire les noeuds à portée de communication du noeud C1. Puis, au moins un des noeuds voisins diffuse le message M reçu. Le processus est réitéré jusqu'à ce le message M atteigne le dispositif de collecte D.

La **figure 2** représente un exemple de capteur Ci du système SYS.

Le capteur Ci comporte de façon connue, notamment une unité de traitement UT équipée d'un microprocesseur, une mémoire morte de type ROM ou EEPROM 103, une mémoire vive de type RAM 104, un module d'émission EMI et un module de réception REC.

Le module d'émission EMI est apte à émettre de données via une liaison sans fil. Plus précisément, le module d'émission EMI est apte à émettre un signal représentatif de données sur un canal de communication Z dont la fréquence est prédéterminée.

Le module de réception REC est apte à recevoir des données via une liaison sans fil. Plus précisément, le module de réception REC est apte à recevoir un signal représentatif de données émis sur le canal de communication Z de fréquence prédéterminée, par un noeud à portée de communication.

La mémoire morte 103 comporte des registres mémorisant un programme d'ordinateur PG

L'unité de traitement UT est pilotée par le programme informatique PG afin de mettre en oeuvre notamment le procédé de routage selon un des modes de réalisation de l'invention décrit ultérieurement.

Le capteur Ci comporte également un module de sélection SEL d'un intervalle de temps, un module de surveillance SUR, un module de commande CMD ainsi qu'une mémoire temporaire MT.

La mémoire MT est par exemple une mémoire de type RAM, apte à enregistrer des données, par exemple un rapport de mesures, reçues d'un noeud voisin.

Le capteur Ci peut comprendre également un module de mesures MES apte à effectuer périodiquement un ensemble de mesures et à enregistrer le résultat de ces mesures dans la mémoire temporaire MT.

Le module de réception REC est apte à recevoir un message contenant des données et à stocker les données reçues dans la mémoire temporaire MT.

De façon connue, le capteur Ci fonctionne dans un des trois modes suivants : un mode de diffusion dans lequel le module d'émission EMI peut transmettre des données sur le canal de communication, un mode d'écoute dans lequel le module de réception REC peut recevoir des données sur le canal de communication et un mode de repos (mode "idle" en anglais) dans lequel le capteur ne peut ni transmettre des données, ni recevoir des données.

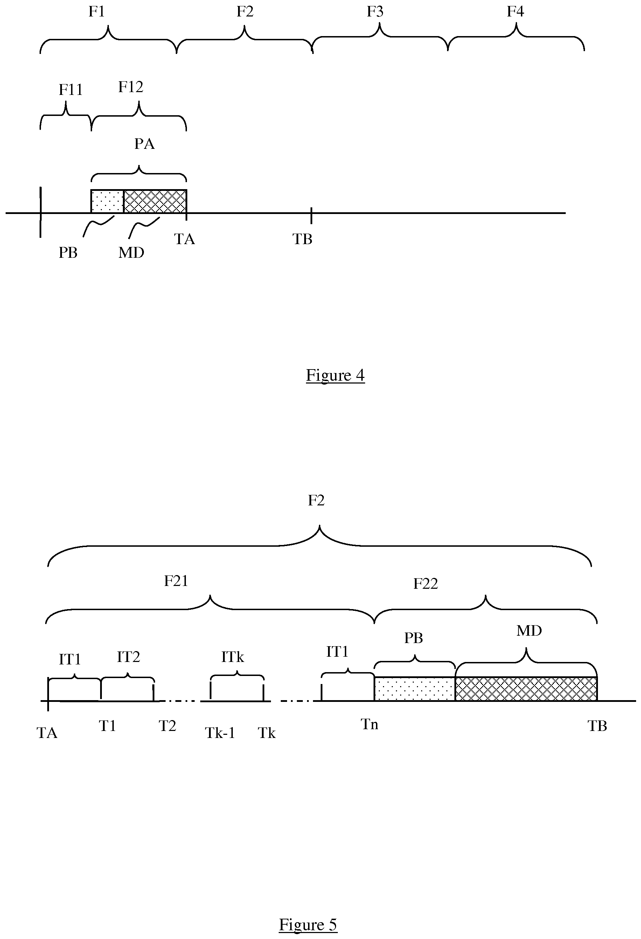

Le procédé de l'invention mis en oeuvre par un capteur Ci du système SYS va maintenant être décrit en référence à la **figure 3.**

Lors d'une première étape E0, un capteur Cj diffuse un paquet de données PA contenant des données MD, sur le canal de communication Z.

Le paquet PA est envoyé par le capteur Cj pendant une première fenêtre temporelle F1. Plus précisément, la première fenêtre temporelle F1 comprend une première fenêtre temporelle de contention F11 suivie d'une première fenêtre temporelle de transmission de données F12.

La **figure 4** est un schéma représentant des fenêtres temporelles.

Pendant une durée commençant à un instant temporel T situé dans la première fenêtre temporelle de contention F11 et se terminant à la fin de la première fenêtre temporelle de contention, le capteur Cj envoie un signal de réservation de canal. Ce signal de réservation est un signal de contrôle permettant de réserver l'accès au médium.

Le signal de réservation de canal est par exemple un signal obtenu par modulation d'une séquence de symboles prédéterminée.

Puis, lors de la première fenêtre temporelle de transmission de données F12, le capteur Cj émet sur le canal de communication Z, le paquet de données PA. Le paquet de données PA comprend un préambule PB suivi des données MD. Le préambule PB contient des informations permettant d'identifier le paquet PA, telles que par exemple un identifiant du noeud source, c'est-à-dire du premier noeud du réseau à transmettre les données MD. Le préambule PB peut également contenir un ou plusieurs identifiants de noeuds intermédiaires, c'est-à-dire de noeuds ayant reçu et retransmis les données MD.

Le paquet PA contenant les données MD est reçu par le module de réception REC du capteur Ci lors d'une étape E2. Pour simplifier la description, les temps de transferts des paquets de données sont ici considérés comme négligeables et il est considéré que le paquet PA est reçu dès qu'il est envoyé, c'est-à-dire que le paquet PA est reçu pendant la première fenêtre temporelle F1, ou plus précisément pendant la première fenêtre temporelle de transmission de données F12. Autrement dit, les étapes E0 et E2 sont réalisées simultanément.

La fin de réception du paquet PA par le noeud Ci se situe à un instant temporel TA correspondant à la fin de la fenêtre temporelle F1.

Lors d'une étape E4, le module de sélection SEL du capteur Ci sélectionne un intervalle de temps IT parmi un ensemble d'intervalles de temps prédéfinis d'une deuxième fenêtre temporelle F2.

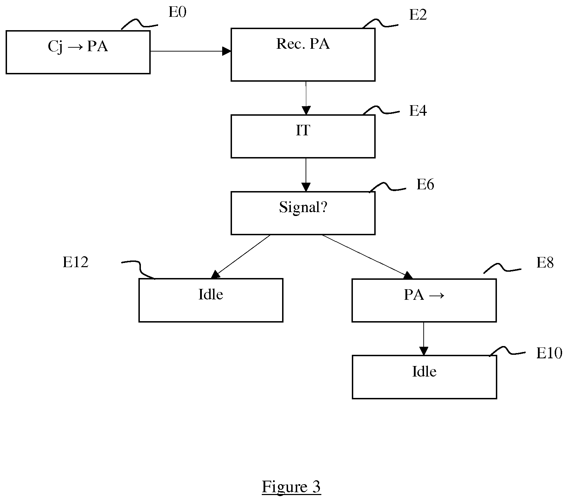

La **figure 5** représente la deuxième fenêtre temporelle F2.

La deuxième fenêtre temporelle F2 est une fenêtre temporelle de durée égale à la durée de la première fenêtre temporelle F1. La deuxième fenêtre temporelle F2 commence à l'instant TA de fin de la première fenêtre temporelle F1, c'est-à-dire à la fin de la réception du paquet PA.

La deuxième fenêtre temporelle F2 comprend une deuxième fenêtre temporelle de contention F21 suivie d'une deuxième fenêtre temporelle de transmission de données F22., chacune de durée prédéterminée.

La deuxième fenêtre temporelle de contention F21 est divisée en un nombre prédéterminé N d'intervalles de temps IT1, IT2, ...ITn.

Dans le mode de réalisation décrit, les intervalles de temps sont de même durée. Ils sont consécutifs et la fin d'un intervalle correspond au début de l'intervalle suivant. Les intervalles de temps sont ainsi ordonnés. Un rang leur est attribué en fonction de leur position par rapport à l'instant TA de début de la deuxième fenêtre temporelle F2, l'intervalle IT1 de rang 1 étant l'intervalle commençant à l'instant TA et l'intervalle ITn de rang N finissant à la fin de la deuxième fenêtre temporelle de contention F21.

L'intervalle ITk de rang k commence ici à la fin de l'intervalle IT(k-1) de rang (k-1).

A titre d'alternative, les intervalles de temps sont disjoints.

L'intervalle ITk de rang k commence à un instant $T_{k-1}$ et se termine à un instant Tk.

Lors de l'étape E4, le module de sélection SEL du capteur Ci sélectionne un intervalle de temps IT parmi les N intervalles de temps.

L'intervalle de temps IT est sélectionné par tirage aléatoire, conformément à une loi de probabilité définie, d'une valeur identifiant cet intervalle.

La valeur identifiant un intervalle est par exemple le rang associé à cet intervalle.

Le titrage aléatoire est par exemple effectué sur l'ensemble des valeurs identifiant un intervalle, par exemple sur les N rangs.

La loi de probabilité P1 est croissante, c'est-à-dire que la probabilité PI(k+1) de sélectionner le rang (k+1) est supérieure ou égale à la probabilité P1(k) de sélectionner le rang k.

En conséquence, la probabilité de sélectionner un intervalle de temps de rang (k+1) est supérieure ou égale à la probabilité de sélectionner un intervalle de temps de rang k.

Par ailleurs, la loi de probabilité P1 est telle que la somme des probabilités de sélection de chaque intervalle IT est égale à 1 : P1(1) + P1(2) +...+ P1(N) = 1.

La loi de probabilité P1 est par exemple une loi de distribution uniforme selon laquelle la probabilité de sélection de chaque intervalle de temps est de 1/N.

L'intervalle de temps sélectionné IT est par exemple l'intervalle ITk de rang k commençant à l'instant $T_{k-1}$ et se terminant à l'instant Tk.

Lors d'une étape E6, réalisée entre l'instant TA de début de la deuxième fenêtre temporelle F2 et l'instant $T_{k-1}$ de début de l'intervalle ITk sélectionné, le module de surveillance SUR du capteur Ci surveille le canal de communication Z pour y détecter une activité d'émission par un noeud voisin. Plus précisément, le module de surveillance SUR surveille si un signal est reçu par le module de réception REC du capteur Ci. En effet, lorsqu'un noeud voisin tente d'accéder au médium, il émet un signal comme décrit précédemment. Le signal est alors reçu par le module de réception REC du capteur Ci. La réception d'un signal par le module de réception REC pendant au moins une partie d'un période comprise entre TA et Tk-1 est significative de l'activité de transmission d'au moins un des noeuds voisins du capteur Ci.

Si aucun signal n'est détecté pendant l'étape de surveillance E6, le module de commande CMD du capteur Ci, lors d'une étape E8, commande la diffusion, par le module d'émission EMI du capteur Ci, des données MD reçues pendant la première fenêtre temporelle F1. Plus précisément, entre les instants $T_{k-1}$ et Tn, le module d'émission EMI du capteur Ci envoie un signal pour réserver l'accès au médium, puis entre l'instant Tn et un instant TB de fin de la deuxième fenêtre temporelle F2, le module d'émission EMI du capteur Ci transmet les données MD. Plus précisément, le module d'émission EMI du capteur Ci transmet le paquet de données PA contenant le préambule PB suivi des données MD.

A titre d'alternative, le paquet transmis est un paquet PA1 contenant un préambule PR et les données MD. Le préambule PR correspond au préambule PB reçu lors de l'étape E2, modifié. Le préambule modifié PR correspond par exemple au préambule PB auquel des coordonnées du capteur Ci ont été ajoutées.

L'étape E8 est suivie d'une étape E10 pendant laquelle le module de commande CMD du capteur Ci positionne le capteur Ci en mode repos (mode "Idle" en anglais) pendant une durée prédéterminée, par exemple une ou plusieurs fenêtres temporelles.

Si un signal est reçu pendant l'étape de surveillance E6, le module de commande CMD du capteur Ci interprète cette présence de signal comme étant la diffusion du paquet PA par un noeud voisin ayant reçu le même paquet PA et le module de commande CMD du capteur Ci ne commande pas la diffusion du paquet PA contenant les données MD (étape E12). Le paquet PA n'est pas diffusé par le capteur Ci. L'étape E12 est une étape de non diffusion.

Dans le mode réalisation décrit, lors de l'étape E12 de non diffusion, le capteur Ci est positionné en mode de repos et reste dans ce mode pendant une durée prédéterminée, par exemple une ou plusieurs fenêtres temporelles. Le mode repos est un mode dans lequel le capteur est sourd et muet, c'est-à-dire qu'il n'envoie pas de signal et ne prend pas en compte les signaux diffusés par les noeuds voisins.

Dans une première variante, l'étape E12 de non diffusion est une étape d'écoute lors de laquelle le module de commande CMD du capteur Ci ne commande pas le passage en mode repos et le capteur Ci reste positionné en mode réception pendant la deuxième fenêtre temporelle F2.

Si aucun paquet de données n'est reçu par le module de réception REC du capteur Ci pendant la deuxième fenêtre temporelle F2, les étapes E4 à E12 sont réitérées, pendant une troisième fenêtre temporelle F3 (figure 4). La fenêtre temporelle F3 est de durée égale à la durée de la deuxième fenêtre temporelle F2 et commence à la fin de la fenêtre temporelle F2.

Si un paquet PA1 est reçu pendant la deuxième fenêtre temporelle F2, le module de commande CMD du capteur Ci compare le paquet PA1 reçu pendant la deuxième fenêtre temporelle F2 et le paquet PA reçu pendant la première fenêtre temporelle F1. Le module de commande CMD exécute une étape de repos ou une étape de rediffusion en fonction du résultat de cette comparaison.

S'il est déterminé lors de la comparaison que le paquet PA et le paquet PA1 sont identiques, le module de commande CMD du capteur Ci positionne le capteur Ci en mode repos. La réception d'un paquet PA1 identique au paquet PA signifie qu'un des voisins ayant reçu le paquet PA pendant la première fenêtre temporelle F1, l'a diffusé pendant la deuxième fenêtre temporelle F2.

Dans un mode de réalisation particulier, la comparaison de deux paquets de données consiste à comparer tout ou parties des informations contenues dans les préambules des paquets, par exemple les identifiants du noeud source.

La réception d'un paquet PA1 identique au paquet PA pendant la deuxième fenêtre temporelle F2 sert d'acquittement de l'envoi.

S'il est déterminé lors de la comparaison que les paquets de données PA1 et PA sont différents, les étapes E4 à E12 sont réitérées pendant une troisième fenêtre temporelle F3 commençant à la fin de la deuxième fenêtre temporelle F2 et de longueur identique à la première fenêtre temporelle F1, respectivement à la deuxième fenêtre temporelle F2.

Le processus de réémission, c'est-à-dire la réitération des étapes E4 à E12 pendant une fenêtre temporelle suivant une fenêtre temporelle courante, lorsqu'aucun paquet n'est reçu pendant la fenêtre temporelle courante ou lorsque le paquet reçu pendant la fenêtre temporelle courante ne correspond pas à celui attendu, peut être exécuté plusieurs fois.

Dans une variante de réalisation, un nombre maximum de réitérations est fixé et le processus de réémission s'arrête lorsque ce nombre maximum est atteint.

Dans une autre variante de réalisation, lorsque le nombre maximum de réitérations est atteint, l'étape d'écoute est suivie d'une étape de sélection de l'intervalle de rang le plus faible, par exemple le rang 1 et les étapes E6 de surveillance, E8 de diffusion et E10 sont réitérées. La sélection du rang 1, c'est-à-dire la sélection de l'intervalle IT1, implique l'exécution de l'étape E8 de diffusion des données. En effet, lors de la sélection de l'intervalle IT, aucun signal n'est reçu pendant l'étape E6 de surveillance.

Dans une deuxième variante, utilisée seule ou en complément de la première variante, l'étape E8 de diffusion du paquet PA pendant la deuxième fenêtre temporelle F2 est suivie d'une étape d'écoute lors de laquelle le module de commande CMD du capteur Ci positionne le capteur Ci en mode d'écoute pendant une troisième fenêtre temporelle F3, consécutive à la deuxième fenêtre F2.

Si aucun paquet n'est reçu pendant la troisième fenêtre temporelle F3 par le module de réception REC du capteur Ci, les étapes E4 à E10 sont réitérées pendant une quatrième fenêtre temporelle F4 commençant à la fin de la fenêtre temporelle F3 (figure 4).

Si un paquet de données PA2 est reçu pendant la troisième fenêtre temporelle F3, le module de commande CMD du capteur Ci compare le paquet PA2 reçu pendant la troisième fenêtre temporelle F3 et le paquet PA transmis pendant la deuxième fenêtre temporelle F2.

Si les paquets PA et PA2 sont identiques, le module de commande CMD du capteur Ci positionne le capteur Ci en mode repos pendant une ou plusieurs fenêtres temporelles. La réception d'un paquet PA2 identique au paquet PA signifie qu'un des voisins du capteur Ci ayant reçu le paquet PA pendant la deuxième fenêtre temporelle F2 l'a rediffusé pendant la troisième fenêtre temporelle F3.

La réception, pendant la troisième fenêtre temporelle F3, d'un paquet PA2 identique au paquet PA sert d'acquittement de l'envoi.

Si les paquets de données PA et PA2 sont différents, les étapes E4 à E12 sont réitérées par le capteur Ci, pendant une quatrième fenêtre temporelle F4 commençant à la fin de la troisième fenêtre temporelle F3 et de longueur identique à la première F1, respectivement la deuxième fenêtre temporelle F2.

Selon une variante du mode de réalisation, un nombre maximum de tentatives de réémission peut être défini pour s'assurer que le processus s'arrête.

Selon une autre variante utilisée seule ou en combinaison, après un nombre maximum prédéfini de tentatives d'émission infructueuses, l'intervalle de rang le plus faible est sélectionné. La sélection de l'intervalle de rang le plus faible entraine la diffusion des données.

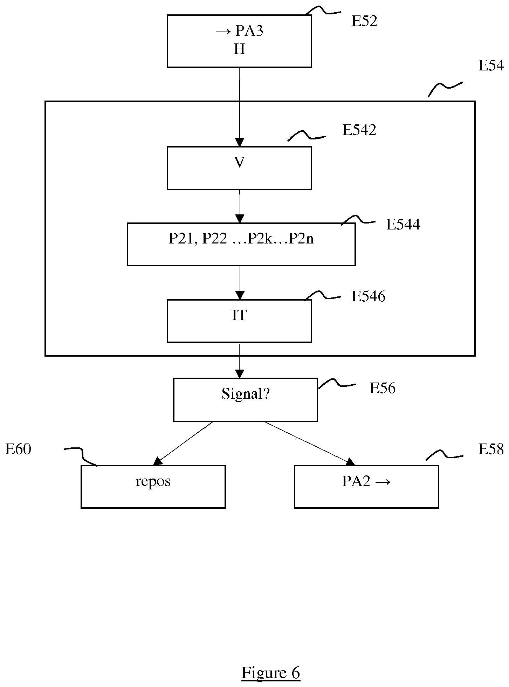

Un deuxième mode de réalisation du procédé de routage mis en oeuvre par un capteur Ci du système SYS va maintenant être décrit en référence à la **figure 6.**

Lors d'une étape E52, le capteur Ci reçoit un paquet de données PA3 contenant des données MD2. Le paquet PA3 est par exemple diffusé par un capteur Cj voisin du capteur Ci.

Le paquet PA3 est reçu pendant une première fenêtre temporelle F1.

Plus précisément, la première fenêtre temporelle F1 comprend une première fenêtre temporelle de contention F11 suivie d'une première fenêtre temporelle de transmission de données F12.

Pendant une durée commençant à un instant temporel T compris dans la première fenêtre temporelle de contention F11 et se terminant à la fin de la première fenêtre temporelle de contention, le capteur Ci reçoit un signal émis sur le canal de communication Z pour indiquer la diffusion d'un paquet de données. Puis pendant la première fenêtre de transmission F12, le capteur Ci reçoit un paquet de données contenant un préambule et les données MD2.

Egalement, lors de l'étape E52, pendant la réception du préambule, le capteur Ci effectue une mesure H du RSSI (pour "Received Signal Strength Indication" en anglais). Le RSSI, notamment défini dans la norme IEEE (pour "Institute of Electrical and Electronics Engineers") 802.11 est une mesure de la puissance du signal radio reçu.

De façon connue, la puissance du signal reçu varie en fonction de la distance entre le noeud émetteur et le noeud recevant les données. Plus cette distance est grande, plus la puissance du signal reçu est faible.

A titre d'alternative, la mesure H est une mesure du RCPI (pour "Received Channel Power Indicator" ou encore une mesure de l'intensité du signal reçu.

Plus généralement, la mesure H est une mesure du signal reçu par le capteur Ci lors de la réception d'un paquet de données.

A titre d'alternative, la mesure H est effectuée pendant toute la durée de réception du paquet de données.

Plus généralement, la mesure H est une mesure permettant d'évaluer une «distance» au sens large entre le noeud émetteur ayant émis le signal et le capteur récepteur Ci recevant ce signal.

Lors d'une étape E54, le module de sélection SEL du capteur Ci sélectionne un intervalle de temps IT parmi un ensemble de N intervalles de temps prédéfinis d'une deuxième fenêtre temporelle F2.

La deuxième fenêtre temporelle F2 est une fenêtre temporelle de durée égale à celle de la première fenêtre temporelle F1 et commençant à l'instant TA de fin de la première fenêtre temporelle F1, c'est-à-dire à la fin de la réception du paquet PA2 reçu.

La deuxième fenêtre temporelle F2 comprend une deuxième fenêtre temporelle de contention F21 suivie d'une deuxième fenêtre temporelle de transmission de données F22, chacune de durée prédéterminée.

La deuxième fenêtre temporelle de contention F21 est divisée en un nombre prédéterminé N d'intervalles de temps IT1, IT2, ...ITn.

Dans le mode de réalisation décrit, les intervalles de temps sont consécutifs et la fin d'un intervalle correspond au début de l'intervalle suivant. Les intervalles de temps sont ainsi ordonnés. Un rang leur est attribué en fonction de leur position par rapport à l'instant T0 de début de la deuxième fenêtre temporelle F2, l'intervalle IT1 de rang 1 étant l'intervalle commençant à l'instant T0 et l'intervalle ITn de rang N finissant à la fin de la deuxième fenêtre temporelle F2..

L'intervalle de rang (k+1) commence ici à la fin de l'intervalle de rang k.

L'intervalle de temps IT est sélectionné par tirage aléatoire, conformément à une loi de probabilité P2, d'une valeur identifiant cet intervalle.

La loi de probabilité P2 est une loi de probabilité croissante et est. telle que la somme des probabilités de chaque intervalle IT est égale à 1.

Plus précisément l'étape E54 comprend trois sous étapes E542, E544 et E546.

Lors de la première sous étape E542, une valeur A représentative de la qualité du signal reçu est déterminée à partir de la mesure H déterminée au cours de l'étape E52.

La valeur A est déterminée par application d'une fonction prédéterminée à la mesure H. Plus précisément, la valeur A représentative de la qualité du signal est déterminée par la formule :

$$A = G(H)$$

dans laquelle G représente une fonction décroissante prédéterminée.

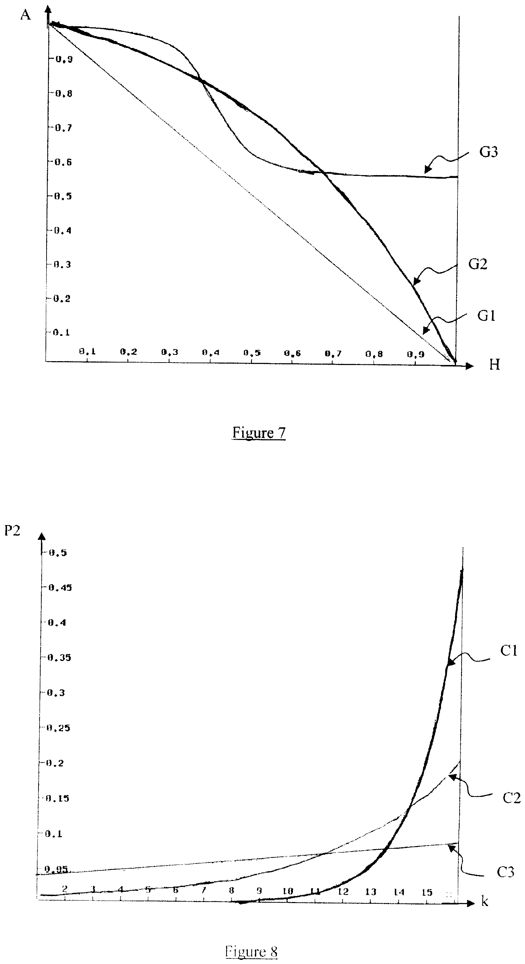

La **figure 7** illustre des exemples de fonction G.

La fonction G est par exemple une fonction linéaire G1, une fonction exponentielle G2 ou une fonction sigmoïde G3.

Dans les exemples représentés sur la figure 7, les valeurs de H d'une part et de A d'autre part sont comprises dans l'intervalle [0,1].

A titre d'alternative, tout intervalle peut être défini pour A et pour H.

Par exemple, la valeur A est déterminée par l'expression :

$$A = G(H) = (1-8^{(H-1)}/(1-8^{-1})$$

dans laquelle la mesure H est exprimée sous la forme d'un nombre prédéterminé de bits, par exemple 8 bits. La valeur A est ici un nombre compris entre 0 et 1.

De façon connue, la puissance du signal reçu varie en fonction de la distance entre le noeud émetteur et le noeud recevant les données. Plus cette distance est grande, plus la puissance est faible et plus la valeur A est proche de 0.

La valeur A est ainsi déterminée en fonction d'une mesure du signal reçu. Cette mesure est dépendante du contexte du voisinage d'un noeud, notamment de la distance entre le noeud émetteur et le noeud recevant les données. La valeur A est donc différente pour chaque noeud et différente à chaque réception de données. Ainsi, chaque noeud régule individuellement sa distribution en fonction de son contexte de voisinage local.

Puis lors d'une étape E544, la probabilité de sélection P2k de chaque intervalle de temps ITk est déterminée.

La probabilité de sélection P2k d'un intervalle de temps ITk est une fonction F de la valeur A représentative de la qualité du signal reçu et du nombre N d'intervalles de temps de la fenêtre de contention.

Par exemple, $P2k = F (A, N, k) = A^{-k} (1-A) A^N / (1-A^N)$.

La valeur A représente un paramètre de contrôle du taux de croissance de la loi de probabilité P2.

N probabilités P21, P22...P2n sont ainsi déterminées, respectivement pour les intervalles IT1, IT2...ITn.

La **figure 8** représente des exemples de courbes illustrant les valeurs de probabilité P2k obtenues pour chaque intervalle d'un ensemble de 16 intervalles, en fonction du rang k de l'intervalle et d'une valeur de A.

La courbe C1 correspond à une valeur de A=A1=0,95
La courbe C2 correspond à une valeur de A==A2=0,8
La courbe C3 correspond à une valeur de A=A3=0,5

La valeur de PK2 obtenue pour un intervalle de temps de rang faible est plus grande avec A3 qu'avec A2 et A1.

La fonction P2 telle que définie ci-dessus permet d'obtenir une probabilité de sélection d'un intervalle de temps de rang faible plus élevée quand la puissance est faible que lorsque la puissance est élevée.

Cette pondération de la loi de probabilité P2 en fonction de la puissance du signal reçu permet d'augmenter la probabilité pour un noeud éloigné de transmettre le message.

Puis, lors d'une étape E546, le capteur Ci sélectionne une valeur identifiant un intervalle de temps IT parmi les N intervalles de temps par tirage aléatoire, conformément à la loi de probabilité P2. L'intervalle IT identifié par cette valeur est l'intervalle sélectionné.

A titre d'alternative, les différentes valeurs possibles de P2k pour différentes valeurs de A de N et de k sont déterminées dans une phase préalable (non représentée) et enregistrées dans une mémoire du capteur Ci, par exemple une mémoire 103. L'étape E544 est alors une étape de lecture dans la mémoire 103.

L'intervalle sélectionné IT est par exemple l'intervalle ITk de rang k commençant à l'instant $T_{k-1}$ et se terminant à l'instant Tk.

Lors d'une étape E56, réalisée entre l'instant TA et l'instant $T_{k-1}$, le module de surveillance SUR du capteur Ci surveille le canal de communication Z pour y détecter une activité d'émission par un noeud voisin. Plus précisément, le module de surveillance SUR surveille si un signal est reçu par le module de réception REC du capteur Ci.

Si aucune activité n'est détectée pendant l'étape de surveillance E56, le module d'émission EMI, lors d'une étape E58, retransmet les données MD2 reçu dans le paquet PA2 pendant la première fenêtre temporelle. Plus précisément, entre les instants $T_{k-1}$ et Tn, le module d'émission EMI envoie un signal de contention pour réserver l'accès au médium, puis entre les instants Tn et TB, le module d'émission EMI envoie un préambule suivi des données MD2.

Si une activité de diffusion a été détecté pendant l'étape de surveillance E56, lors d'une étape E60, le capteur interprète cette activité comme la diffusion des données MD2 par un noeud voisin ayant reçu le même message et ne diffuse pas les données MD2.

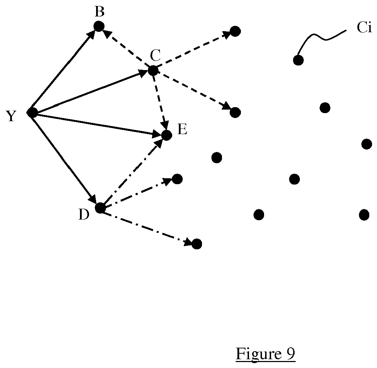

La **figure 9** illustre un mode de réalisation du procédé de routage mis en oeuvre par une pluralité de capteurs.

Lors de la première fenêtre temporelle F1, un capteur Y diffuse un paquet P de données contenant des données M.

Le paquet P est reçu par les capteurs B, C, D, E, voisins du capteur Y, pendant la première fenêtre temporelle F1.

La première fenêtre temporelle F1 comporte une fenêtre de contention suivie d'une fenêtre de transmission de données. La fenêtre de contention est par exemple divisée en 4 intervalles de temps IT1, IT2, IT3 et IT4.

Le chiffre de 4 est choisi arbitrairement dans un souci de simplification de l'exposé. Dans la pratique, ce chiffre est plus élevé, par exemple 16 ou 32 en fonction de la densité du réseau en termes du nombre moyen des voisins pour chaque noeud.

Les différences de temps de transfert entre d'une part le noeud source et d'autre part les noeuds voisins étant négligeables, la fin du paquet de données P est reçue simultanément par les capteurs. Cette fin qui correspond à la fin TA de la première fenêtre temporelle F1 constitue un évènement de synchronisation qui permet à chaque capteur de déterminer le début d'une deuxième fenêtre temporelle F2. L'événement de synchronisation est utilisé pour déterminer une succession de fenêtres temporelles communes à tous les voisins ayant reçu le paquet de données PA.

Pendant la deuxième fenêtre temporelle F2, consécutive à la première fenêtre temporelle F1, chaque capteur B, C, D, E sélectionne un intervalle de temps IT parmi les quatre intervalles de la fenêtre de contention de la deuxième fenêtre temporelle F2. Par exemple, le capteur B sélectionne le deuxième intervalle IT2, le capteur C sélectionne le premier intervalle IT1, le capteur D sélectionne le quatrième intervalle IT4 et le capteur E sélectionne le troisième intervalle IT3.

Il est précisé que chaque capteur sélectionne un intervalle sans tenir compte de la sélection faite par les capteurs voisins. Il est ainsi possible que deux capteurs voisins choisissent le même intervalle.

Le capteur C commence à émettre un signal à partir du début du premier intervalle IT1. Le capteur B, à proximité du capteur C, détecte le signal émis par le capteur C et ne diffuse pas les données M. Le capteur E, également à proximité du capteur C, détecte également le signal émis par le capteur C et ne diffuse pas les données M.

Le capteur D n'est pas voisin du capteur C. Lors de l'étape de surveillance entre la fin de la première fenêtre temporelle F1 et le début du troisième intervalle IT3 de la deuxième fenêtre F2, le capteur D ne détecte aucun signal. Aussi, le capteur D diffuse un paquet de données contenant les données M.

## Revendications

**1.** Procédé de routage de données (MD) diffusées par un premier dispositif et reçues par un deuxième dispositif pendant une première fenêtre temporelle (F1), le premier, respectivement le deuxième, dispositif formant un premier, respectivement un deuxième, noeud (Ci) d'un réseau d'une pluralité de noeuds aptes à communiquer à travers un canal de communication sans fil comportant les étapes suivantes, mises en oeuvre par le deuxième dispositif:

- sélection (E4) d'un intervalle de temps (IT) parmi un ensemble d'intervalles de temps prédéfinis d'une deuxième fenêtre temporelle (F2) consécutive à ladite première fenêtre temporelle (F1);
ledit intervalle de temps (IT) étant sélectionné par tirage aléatoire, conformément à une loi de probabilité définie, d'une valeur identifiant ledit intervalle,
la deuxième fenêtre temporelle comportant un nombre prédéterminé N d'intervalles de temps consécutifs prédéterminés, un rang étant associé à un intervalle en fonction d'une position dudit intervalle par rapport au début de la deuxième fenêtre temporelle, la probabilité de sélectionner l'intervalle de rang k+1 parmi les N intervalles étant supérieure ou égale à la probabilité de sélectionner l'intervalle de rang k,
la probabilité de sélection d'une valeur identifiant un intervalle étant déterminée en fonction d'une valeur représentative d'une qualité du signal reçu lors de la réception desdites données (MD), du nombre d'intervalles et de ladite valeur identifiant l'intervalle et ladite valeur représentative d'une qualité du signal reçu représentant un paramètre de contrôle d'un taux de croissance de la loi de probabilité ;
- surveillance (E6) dudit canal entre la fin de ladite première fenêtre temporelle (TA) et ledit intervalle de temps sélectionné pour détecter la présence ou l'absence d'un signal sur ledit canal;
- diffusion (E8) desdites données à partir d'un instant dudit intervalle de temps sélectionné (IT) en cas de détection d'absence de signal et
- non diffusion (E12) en cas de détection de présence de signal.

**2.** Procédé de routage selon la revendication 1 dans lequel ladite valeur représentative d'une qualité dudit signal est déterminée à partir d'une mesure dudit signal.

**3.** Procédé de routage selon la revendication 1 ou 2 dans lequel la probabilité de sélection d'un intervalle de rang faible est inversement proportionnelle à ladite valeur représentative d'une qualité du signal reçu.

**4.** Procédé de routage selon la revendication 1 dans lequel l'étape de diffusion est suivie d'une étape de repos pendant laquelle la fonction de réception est désactivée.

**5.** Procédé de routage selon la revendication 1 dans lequel l'étape de non diffusion comprend une étape d'écoute pendant laquelle la fonction de réception est activée.

**6.** Procédé de routage selon la revendication 1 dans lequel l'étape de non diffusion est suivie d'une étape de sélection de l'intervalle de rang le plus faible et d'une étape de diffusion des données.

**7.** Procédé de routage selon la revendication 1 dans lequel en cas de détection d'un signal pendant l'étape de surveillance, le procédé comprend une étape de réception de données et une étape de comparaison des données reçues pendant la première fenêtre temporelle avec les données reçues pendant l'étape de réception.

**8.** Procédé de routage selon la revendication 1 dans lequel l'étape de diffusion est suivie

- d'une étape de réception de données,
- d'une étape de comparaison desdites données reçues avec les données transmises pendant l'étape de diffusion et, en fonction du résultat de la comparaison,
- d'une étape de repos pendant laquelle la fonction de réception est désactivée ou
- d'une étape de rediffusion desdites données transmises

**9.** Dispositif (Ci) formant noeud d'un réseau d'une pluralité de noeuds aptes à communiquer à travers un canal de communication sans fil, comportant des moyens de réception de données (MD) pendant une première fenêtre temporelle (F1), lesdites données étant diffusées par un premier dispositif formant noeud (Cj), comportant :

- des moyens de sélection (SEL) d'un intervalle de temps parmi un ensemble d'intervalles de temps prédéfinis d'une deuxième fenêtre temporelle consécutive à ladite première fenêtre temporelle (F1), ledit intervalle de temps (IT) étant sélectionné par tirage aléatoire, conformément à une loi de probabilité définie, d'une valeur identifiant ledit intervalle,
la deuxième fenêtre temporelle comportant un nombre prédéterminé N d'intervalles de temps consécutifs prédéterminés, un rang étant associé à un intervalle en fonction d'une position dudit intervalle par rapport au début de la deuxième fenêtre temporelle, la probabilité de sélectionner l'intervalle de rang k+1 parmi les N intervalles étant supérieure ou égale à la probabilité de sélectionner l'intervalle de rang k,
la probabilité de sélection d'une valeur identifiant un intervalle étant déterminée en fonction d'une valeur représentative d'une qualité du signal reçu lors de la réception desdites données (MD), du nombre d'intervalles et de ladite valeur identifiant l'intervalle et ladite valeur représentative d'une qualité du signal reçu représentant un paramètre de contrôle d'un taux de croissance de la loi de probabilité;
- des moyens de surveillance (SUR) dudit canal entre la fin de ladite première fenêtre temporelle et ledit intervalle de temps sélectionné pour détecter la présence ou l'absence d'un signal sur ledit canal;
- des moyens (CMD) de diffusion desdites données à partir d'un instant dudit intervalle de temps en cas de détection d'absence de signal et
- des moyens de non diffusion en cas de détection de présence de signal.

**10.** Système (SYS) comprenant une pluralité de dispositifs formant noeuds dans lequel au moins un desdits dispositifs (Ci) est conforme à la revendication 9.

11. Produit programme d'ordinateur comprenant des instructions pour mettre en oeuvre les étapes du procédé de routage selon la revendication 1, lorsqu'il est chargé et exécuté par un processeur.

**Patentansprüche**

1. Verfahren zum Routen von Daten (MD), die von einer ersten Vorrichtung übermittelt und von einer zweiten Vorrichtung während eines ersten Zeitfensters (F1) empfangen werden, wobei die erste bzw. die zweite Vorrichtung einen ersten bzw. zweiten Knoten (Ci) eines Netzwerks einer Vielzahl von Knoten bildet, die über einen drahtlosen Kommunikationskanal kommunizieren können, das die folgenden Schritte aufweist, die von der zweiten Vorrichtung durchgeführt werden:

   - Auswahl (E4) eines Zeitintervalls (IT) aus einer Einheit von vordefinierten Zeitintervallen eines auf das erste Zeitfenster (F1) folgenden zweiten Zeitfensters (F2);
   wobei das Zeitintervall (IT) durch Zufallsziehung gemäß einem definierten Wahrscheinlichkeitsgesetz eines das Intervall bezeichnenden Werts ausgewählt wird,
   wobei das zweite Zeitfenster eine vorbestimmte Anzahl N von vorbestimmten aufeinanderfolgenden Zeitintervallen aufweist, wobei ein Rang einem Intervall abhängig von einer Position des Intervalls bezüglich des Beginns des zweiten Zeitfensters zugeordnet wird, wobei die Wahrscheinlichkeit der Auswahl des Intervalls des Rangs k+1 aus den N Intervallen größer als oder gleich der Wahrscheinlichkeit ist, das Intervall des Rangs k zu wählen,
   wobei die Wahrscheinlichkeit der Auswahl eines ein Intervall bezeichnenden Werts abhängig von einem repräsentativen Wert einer Qualität des beim Empfang der Daten (MD) empfangenen Signals, der Anzahl von Intervallen und dem das Intervall bezeichnenden Wert bestimmt wird, und der für eine Qualität des empfangenen Signals repräsentative Wert einen Kontrollparameter einer Wachstumsrate des Wahrscheinlichkeitsgesetzes darstellt;
   - Überwachung (E6) des Kanals zwischen dem Ende des ersten Zeitfensters (TA) und dem ausgewählten Zeitintervall, um das Vorhandensein oder das Nichtvorhandensein eines Signals auf dem Kanal zu erfassen;
   - Übermittlung (E8) der Daten ausgehend von einem Zeitpunkt des ausgewählten Zeitintervalls (IT) im Fall der Erfassung des Nichtvorhandenseins eines Signals, und

   - Nicht-Übermittlung (E12) im Fall der Erfassung des Vorhandenseins eines Signals.

2. Routing-Verfahren nach Anspruch 1, wobei der für eine Qualität des Signals repräsentative Wert ausgehend von einer Messung des Signals bestimmt wird.

3. Routing-Verfahren nach Anspruch 1 oder 2, wobei die Wahrscheinlichkeit der Auswahl eines Intervalls niedrigen Rangs umgekehrt proportional zu dem für eine Qualität des empfangenen Signals repräsentativen Wert ist.

4. Routing-Verfahren nach Anspruch 1, wobei auf den Übermittlungsschritt ein Ruheschritt folgt, während dessen die Empfangsfunktion deaktiviert ist.

5. Routing-Verfahren nach Anspruch 1, wobei der Schritt der Nicht-Übermittlung einen Abhörschritt enthält, während dessen die Empfangsfunktion aktiviert ist.

6. Routing-Verfahren nach Anspruch 1, wobei auf den Schritt der Nicht-Übermittlung ein Schritt der Auswahl des Intervalls niedrigsten Rangs und ein Schritt der Übermittlung der Daten folgt.

7. Routing-Verfahren nach Anspruch 1, wobei im Fall der Erfassung eines Signals während des Überwachungsschritts das Verfahren einen Schritt des Datenempfangs und einen Schritt des Vergleichs der während des ersten Zeitfensters empfangenen Daten mit den während des Empfangsschritts empfangenen Daten enthält.

8. Routing-Verfahren nach Anspruch 1, wobei auf den Übermittlungsschritt folgen

   - ein Schritt des Datenempfangs,
   - ein Schritt des Vergleichs der empfangenen Daten mit den während des Übermittlungsschritts übertragenen Daten, und abhängig vom Ergebnis des Vergleichs,
   - ein Ruheschritt, während dessen die Empfangsfunktion deaktiviert ist, oder
   - ein Schritt der erneuten Übermittlung der übertragenen Daten.

9. Vorrichtung (Ci), die einen Knoten eines Netzwerks einer Vielzahl von Knoten bildet, die über einen drahtlosen Kommunikationskanal kommunizieren können, die Einrichtungen zum Empfang von Daten (MD) während eines ersten Zeitfensters (F1) aufweist, wobei die Daten von einer ersten einen Knoten bildenden Vorrichtung (Cj) übermittelt werden, die aufweist

- Auswahleinrichtungen (SEL) eines Zeitintervalls aus einer Einheit von vordefinierten Zeitintervallen eines auf das erste Zeitfenster (F1) folgenden Zeitfensters, wobei das Zeitintervall (IT) durch Zufallsziehung gemäß einem definierten Wahrscheinlichkeitsgesetz eines das Intervall bezeichnenden Werts ausgewählt wird,
wobei das zweite Zeitfenster eine vorbestimmte Anzahl N von vorbestimmten aufeinanderfolgenden Zeitintervallen aufweist, wobei ein Rang einem Intervall abhängig von einer Position des Intervalls bezüglich des Beginns des zweiten Zeitfensters zugeordnet wird, wobei die Wahrscheinlichkeit der Auswahl des Intervalls des Rangs k+1 aus den N Intervallen größer als oder gleich der Wahrscheinlichkeit ist, das Intervall des Rangs k zu wählen,
wobei die Wahrscheinlichkeit der Auswahl eines ein Intervall bezeichnenden Werts abhängig von einem Wert, der für eine Qualität des bei Empfang der Daten (MD) empfangenen Signals repräsentativ ist, von der Anzahl von Intervallen und vom das Intervall bezeichnenden Wert bestimmt wird, und der für eine Qualität des empfangenen Signals repräsentative Wert einen Kontrollparameter einer Wachstumsrate des Wahrscheinlichkeitsgesetzes darstellt;
- Überwachungseinrichtungen (SUR) des Kanals zwischen dem Ende des ersten Zeitfensters und dem ausgewählten Zeitintervall, um das Vorhandensein oder das Nichtvorhandensein eines Signals auf dem Kanal zu erfassen;
- Übermittlungseinrichtungen (CMD) der Daten ausgehend von einem Zeitpunkt des Zeitintervalls im Fall der Erfassung des Nichtvorhandenseins eines Signals, und
- Einrichtungen der Nicht-Übermittlung im Fall der Erfassung des Vorhandenseins eines Signals.

10. System (SYS), das eine Vielzahl von Knoten bildenden Vorrichtungen enthält, wobei mindestens eine der Vorrichtungen (Ci) Anspruch 9 entspricht.

11. Computerprogrammprodukt, das Anweisungen enthält, um die Schritte des Routing-Verfahrens nach Anspruch 1 durchzuführen, wenn es geladen und von einem Prozessor ausgeführt wird.

**Claims**

1. Method for routing data (MD) broadcast by a first device and received by a second device during a first time window (F1), the first, respectively the second, device forming a first, respectively a second, node (Ci) of a network of a plurality of nodes able to communicate through a wireless communication channel comprising the following steps, implemented by the second device:

- selection (E4) of a time interval (IT) from among a set of predefined time intervals of a second time window (F2) following said first time window (F1);
said time interval ($\Gamma\Gamma$) being selected by random drawing, in accordance with a defined probability law, of a value identifying said interval,
the second time window comprising a predetermined number N of predetermined consecutive time intervals, a rank being associated with an interval as a function of a position of said interval with respect to the start of the second time window, the probability of selecting the interval of rank k+1 from among the N intervals being greater than or equal to the probability of selecting the interval of rank k,
the probability of selecting a value identifying an interval being determined as a function of a value representative of a quality of the signal received during the reception of said data (MD), of the number of intervals and of said value identifying the interval and said value representative of a quality of the signal received representing a parameter for controlling a rate of growth of the probability law;
- monitoring (E6) of said channel between the end of said first time window (TA) and said selected time interval so as to detect the presence or the absence of a signal on said channel;
- broadcasting (E8) of said data from an instant of said selected time interval (IT) in case of detection of absence of signal and
- non-broadcasting (E12) in case of detection of presence of signal.

2. Routing method according to Claim 1, in which said value representative of a quality of said signal is determined from a measurement of said signal.

3. Routing method according to Claim 1 or 2, in which the probability of selecting an interval of low rank is inversely proportional to said value representative of a quality of the signal received.

4. Routing method according to Claim 1, in which the broadcasting step is followed by a rest step during which the reception function is deactivated.

5. Routing method according to Claim 1, in which the non-broadcasting step comprises a listening step during which the reception function is activated.

6. Routing method according to Claim 1, in which the non-broadcasting step is followed by a step of selecting the interval of lowest rank and by a step of broadcasting the data.

7. Routing method according to Claim 1, in which in case of detection of a signal during the monitoring step, the method comprises a step of receiving data and a step of comparing the data received during the first time window with the data received during the reception step.

8. Routing method according to Claim 1, in which the broadcasting step is followed

    - by a step of receiving data,
    - by a step of comparing said data received with the data transmitted during the broadcasting step and, as a function of the result of the comparison,
    - by a rest step during which the reception function is deactivated or
    - by a step of rebroadcasting said transmitted data.

9. Device (Ci) forming a node of a network of a plurality of nodes able to communicate through a wireless communication channel, comprising means for receiving data (MD) during a first time window (F1), said data being broadcast by a first node forming device (Cj), comprising:

    - means (SEL) for selecting a time interval from among a set of predefined time intervals of a second time window following said first time window (F1);
    said time interval ($\Gamma\Gamma$) being selected by random drawing, in accordance with a defined probability law, of a value identifying said interval, the second time window comprising a predetermined number N of predetermined consecutive time intervals, a rank being associated with an interval as a function of a position of said interval with respect to the start of the second time window, the probability of selecting the interval of rank k+1 from among the N intervals being greater than or equal to the probability of selecting the interval of rank k, the probability of selecting a value identifying an interval being determined as a function of a value representative of a quality of the signal received during the reception of said data (MD), of the number of intervals and of said value identifying the interval and said value representative of a quality of the signal received representing a parameter for controlling a rate of growth of the probability law,
    - means (SUR) for monitoring said channel between the end of said first time window and said selected time interval so as to detect the presence or the absence of a signal on said channel;
    - means (CMD) for broadcasting said data from an instant of said time interval in case of detection of absence of signal and
    - means for non-broadcasting in case of detection of presence of signal.

10. System (SYS) comprising a plurality of node forming devices, in which at least one of said devices (Ci) complies with Claim 9.

11. Computer program product comprising instructions for implementing the steps of the routing method according to Claim 1, when it is loaded and executed by a processor.

SYS

C2

C1

Cj

Ci

D

Figure 1

104

UT

Ci

| μP | | RAM | MT | | | EMI |

| ROM | PG | | CMD | SEL | | SUR | REC |

MES

103

Figure 2

F1      F2      F3      F4

F11    F12

PA

PB    MD    TA      TB

Figure 4

F2

F21          F22

PB    MD

IT1   IT2    ITk    IT1

TA   T1   T2   Tk-1   Tk    Tn      TB

Figure 5

E0

Cj → PA

E2

Rec. PA

E4

IT

E6

Signal?

E12

Idle

E8

PA →

E10

Idle

Figure 3

```
                                              ⌇  E52
         ┌──────────────┐
         │  → PA3       │
         │  H           │
         └──────┬───────┘
                │                              ⌇  E54
    ┌───────────┼─────────────────────────┐
    │           ▼                          │
    │    ┌──────────────┐   ⌇ E542         │
    │    │  V           │                  │
    │    └──────┬───────┘                  │
    │           ▼                          │
    │    ┌─────────────────────┐ ⌇ E544    │
    │    │ P21, P22 …P2k…P2n    │           │
    │    └──────────┬──────────┘           │
    │               ▼                      │
    │    ┌──────────────┐   ⌇ E546         │
    │    │  IT          │                  │
    │    └──────┬───────┘                  │
    └───────────┼─────────────────────────┘
                ▼
         ┌──────────────┐  ⌇ E56
         │  Signal?     │
         └──┬────────┬──┘
            │        │
E60  ⌇      ▼        ▼      ⌇ E58
  ┌──────────┐   ┌──────────┐
  │  repos   │   │  PA2 →   │
  └──────────┘   └──────────┘
```

Figure 6

Figure 7

Figure 8

Figure 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **STOJMENOVIC, IVAN.** Position based routing in ad hoc networks. *IEEE Comunications magazine*

- **KIEN NGUYEN et al.** A Prioritized MAC Protocol for Multihop, Event-driven Wireless Sensor Networks. IEEE, 01 Octobre 2006